# EUROPÄISCHE PATENTSCHRIFT

(11) **EP 2 437 866 B1**
(45) Veröffentlichungstag und Bekanntmachung des Hinweises auf die Patenterteilung: **10.10.2012**
(21) Anmeldenummer: 10740229.9
(22) Anmeldetag: 05.08.2010
(51) Int. Cl.: B01D 53/10, C04B 7/36, F27B 7/20, F27D 17/00

(54) **VERFAHREN UND ANLAGE ZUR ABSCHEIDUNG VON QUECKSILBER AUS ABGASEN EINES ZEMENTHERSTELLUNGSPROZESSES**
METHOD AND SYSTEM FOR SEPARATING MERCURY FROM WASTE GASES OF A CEMENT PRODUCTION PROCESS
PROCÉDÉ ET INSTALLATION POUR LE RETRAIT DU MERCURE PRÉSENT DANS LES GAZ D ÉCHAPPEMENT D UN PROCESSUS DE FABRICATION DE CIMENT

(30) Priorität: 11.08.2009 DE 102009036950
(43) Veröffentlichungstag der Anmeldung: 11.04.2012
(73) Patentinhaber: ThyssenKrupp Polysius AG, 59269 Beckum (DE)
(72) Erfinder: SCHULZ, Dietmar, 59269 Beckum (DE); BRENTRUP, Ludger, 59302 Oelde (DE); MENZEL, Karl, 59320 Ennigerloh (DE); BEILMANN, Reinhard, 59302 Oelde (DE); KUPPER, Detlev, 48291 Telgte (DE); TERRY, Mark, Roswell Georgia 30075 (US)
(74) Vertreter: Tetzner, Michael
(86) Internationale Anmeldenummer: PCT/EP2010/061433
(87) Internationale Veröffentlichungsnummer: WO 2011/018409

(56) Entgegenhaltungen:
- EP-A1- 0 299 340
- DE-A1- 4 120 277

## Beschreibung

Die Erfindung betrifft ein Verfahren und eine Anlage zur Abscheidung von Quecksilber aus Abgasen eines Zementherstellungsprozesses.

Quecksilber ist ein leichtflüchtiges Schwermetall, das bereits bei Umgebungstemperaturen flüssig vorliegt. Der Siedepunkt von Quecksilber beträgt 357°C. Aufgrund dieser Eigenschaften transferiert Quecksilber in Verbrennungsprozessen, wie der Zementherstellung, vollständig ins Rauchgas und emittiert über den Kamin. Bei der Klinkererzeugung wird Quecksilber über Rohmaterialien und Brennstoffe in den Prozess eingebracht.

Die Klinkerherstellung erfolgt üblicherweise in zwei Betriebszuständen, dem Verbund- und dem Direktbetrieb. Nach dem Verlassen des Vorwärmers wird das staubbeladene Rauchgas im Verbundbetrieb zur Rohmühle geführt, wo das Rohmaterial gemahlen und durch die thermische Energie des Ofenabgases getrocknet wird. Nach dem Abscheiden des Rohmehls in Zyklonen wird das Rauchgas zur Entstaubung über einen Filter (Gewebe- oder Elektrofilter) geführt. Im Direktbetrieb wird die Mühle nicht betrieben und das Ofenabgas wird nach einer Abkühlung mit Luft oder einer Wassereindüsung direkt in den Filter geleitet. Das entstaubte Gas gelangt über den Kamin in die Atmosphäre. Im Verbundbetrieb werden damit im Filter sowohl der Staub abgeschieden, der aus dem Ofen als auch durch die Rohmühle emittiert wird. Im Direktbetrieb wird dagegen im Filter nur der Staub abgeschieden, der vom Ofen kommt.

Aufgrund der temperaturabhängigen Kondensation und Adsorption am Rohmehl und am Filterstaub wird dem Rauchgas im Verbundbetrieb große Mengen an Quecksilber entzogen, so dass bestehende gesetzliche Grenzwerte häufig eingehalten werden können. Ursache hierfür ist die gute Sorption des Quecksilbers im Bereich der Mahltrocknung, die auf den innigen Gas-Feststoflkontakt, niedrige Temperaturen von etwa 90°C und die Generierung von sehr großen Oberflächen durch die sehr feine Vermahlung des Zementrohmehls auf Korndurchmesser von weniger als 100 µm zurückzuführen ist. Das Quecksilber reichert sich dabei sowohl im Zementrohmehl an, das in den Mühlenzyklonen abgeschieden wird, als auch im Filterstaub des Filters, der im Verbundbetrieb mit dem Feinstanteil des fertigen Mühlenproduktes beaufschlagt wird.

Diese Sorption des Quecksilber an den feinen Partikeln des Kalksteinmehls führt zu einer Aufkonzentration des Schwermetalls im Ofensystem, da das gebundene Quecksilber beim Brennprozess wieder aus dem Kalksteinmehl ausgetrieben wird, um erneut in der Mühle gebunden zu werden. Während der Mühlenlaufzeit steigt damit die Quecksilberkonzentration sowohl im Ofenabgas vor der Mühle als auch im fertig gemahlenen Zementrohmehl, als auch im Filterstaub an.

Wird die Mühle abgeschaltet, gelangt das mit Quecksilber angereicherte Abgas nach einer Abkühlung mit Luft oder Wasser direkt in die Filteranlage. Die Quecksilbersorption im Filter läuft im Vergleich zur Sorption in der Mühle deutlich schlechter ab. Ursache hierfür sind die deutlich höheren Temperaturen von etwa 120-180°C und die schlechtere Durchmischung von Gas und Feststoff. Im Direktbetrieb kommt es damit zu deutlich höheren Quecksilberemissionen und zu einer teilweisen Entlastung des Quecksilberkreislaufes.

In der Kraftwerkstechnik oder Abfallverbrennung wird zur Quecksilberabscheidung das Flugstromverfahren eingesetzt. Hierbei werden Sorbienten, wie z.B. Aktivkohle, Herdofenkoks oder Kohlenstoff/Calcium-Gemische in das Rauchgas eingedüst. Quecksilber adsorbiert am Sorbens und wird so über den nachfolgenden Staubfilter abgeschieden. Abhängig von der Rauchgastemperatur kann eine Kühlung des Rauchgases erforderlich sein.

Ein solches Verfahren wird beispielsweise in der DE 30 18 319 A1 beschrieben. Dabei wird Wasser zur Abkühlung des Rauchgases oder eine Calciumsuspension in das Rauchgas eingedüst, um die Sorption von Quecksilber am Staub bzw. am Calcium zu fördern. Das sorbierte Quecksilber wird mit dem Staub aus dem Rauchgas entfernt.

Dieses Verfahren ist in der Zementindustrie nicht ausreichend, da das Sorbens zusammen mit dem Mühlenprodukt in einem Filter abgeschieden würde und der Staub damit nicht ausgeschleust werden könnte. Da der Staub dem Prozess wieder zugeführt werden muss, kommt es damit nicht zu einer Quecksilberminderung, sondern zu einer Aufkonzentration im Prozess. Die Alternative, einen Filter ausschließlich zur Abscheidung des Sorbens aus dem bereits von den Prozessstäuben gereinigten Rauchgas zu platzieren, steigert den Anlagenaufwand.

Es besteht damit die Notwendigkeit den Filterstaub im Verbundbetrieb und ggf. das mit dem Filterstaub vermischte Sorbens, dass zur Verbesserung der Sorption im Filter eingeblasen wurde, aufzubereiten, d.h. von seiner Quecksilberfracht zu befreien, so dass der Materialstrom dem Herstellungsprozess wieder zugeführt werden kann, ohne zugleich eine Anreicherung des Quecksilbers im Prozess zu verursachen.

In der Patentanmeldung EP 0 272 465 A1 wird ein Prozess zur Abscheidung von Feststoffen in einem Kreislauf dargestellt. Das benötigte Trägermedium (üblicherweise Luft) kann in einem Kreislauf gefördert werden. Hier werden feste Bestandteile mittels Abscheidern (Zyklone und Heißgasfilter) aus dem Prozess ausgetragen, nachdem die Kontaminationen mittels thermischer Austreibung von den Feststoffen ins Trägergas überführt worden sind. Die Schadstoffe werden durch Kondensation in einem oder mehreren nachfolgenden Waschtürmen und einem Separator aus dem Gas entfernt und so von der Gasphase in die Flüssigphase überführt.

Dieses Verfahren hat jedoch den Nachteil, dass im Gaskreislauf keine konstante Temperatur herrscht. So erfolgen die Aufheizung mit dem Ziel der Schadstofffreisetzung und die Abkühlung mit dem Ziel der Schadstoffkondensation in einem Kreislauf. Die vollständige Feststoffausschleusung im Kreislauf stellt außerdem hohe wirtschaftliche Anforderungen an den eingesetzten Heißgasfilter.

Aus der US 2009/0193968 A1 ist ein weiteres Verfahren zur Abscheidung von Quecksilber bei der Zementherstellung bekannt. Hierbei wird quecksilberhaltiger Filterstaub in einer Reaktionszone mit heißen Abgasen in Kontakt gebracht, wobei das Quecksilber in die Gasphase überführt wird. Nach Filterung des Staubes wird dem quecksilberhaltigen Gas ein Sorbens zugeführt, an dem sich das Quecksilber nach Abkühlung anlagert. In einem weiteren Filter wird das Sorbens schließlich wieder ausgefiltert. Das Verfahren arbeitet mit geringen QuecksilberKonzentrationen in der Gasphase und unnötig großen Bauvolumina der Abscheider. Auch energetisch ist das Aufheizen und anschließende Abkühlen des gesamten Trägergases nicht günstig.

Aus der DE 41 20 277 A1 ist ferner ein Verfahren zum Reinigen von Abgasen aus Industrieofenanlagen bekannt.

Dabei wird Quecksilber aus Abgasen eines Zementherstellungsprozesses abgeschieden, wobei das Quecksilber an einem Sorbens sorbiert wird und das Sorbens einem mit einem Trägergas betriebenen Austreibungsreaktor zugeführt wird, wo das Sorbens anschliessend auf Temperaturen von mehr als 250°C erhitzt wird, so dass das Quecksilber aus dem Sorbens ausgetrieben und in die Gasphase überführt wird. Das mit Quecksilber angereicherte Gas aus dem Austreibungsreaktor wird anschliessend in einer Vor-Entstaubungseinrichtung entstaubt und das mit Quecksilber angereicherte und entstaubte Gas wird in einer nachfolgenden Sorptionsstufe gereinigt wird.

In der EP 0 299 340 A1 wird ein Verfahren zur Entfernung von Schwermetallverbindungen aus dem Filterstaub industrieller Anlagen durch thermisches Trennen beschrieben, indem der Filterstaub in einem Reaktionsgefäß bis zur Verdampfungstemperatur erhitzt und die gebildeten Schwermetalldämpfe unter Zuhilfe nahme eines Trägergases in einen Kähler belörebeit und dort abgeschreckt, kondensiert, sublimiert und abgezogen werden. Das Trägergos wird dasei im kreislauf geführt

Aus der US 2005/0075236 A1 ist eine Abtrennung von Quecksilber durch Flugstaub und einer zusätzlich in das Abgas injizierten Menge an Aktivkohle als Sorbens und anschließender Desorption durch Erhitzen zu entnehmen.

Der Erfindung liegt nun die Aufgabe zugrunde, ein Verfahren sowie eine Anlage zur Abscheidung von Quecksilber aus Abgasen eines Zementherstellungsprozesses anzugeben, wobei eine sichere Einhaltung gesetzlicher Grenzwerte bei geringem thermischen Aufwand ermöglicht wird.

Erfindungsgemäß wird diese Aufgabe durch die Merkmale der Ansprüche 1 und 13 gelöst.

Beim erfindungsgemäßen Verfahren zur Abscheidung von Quecksilber aus Abgasen eines Zementherstellungsprozesses wird das Quecksilber an einem Sorbens sorbiert und einem mit einem Trägergas betriebenen Austreibungsreaktor zugeführt. Das Sorbens wird dort auf Temperaturen von mehr 250°C erhitzt, sodass das Quecksilber aus dem Sorbens ausgetrieben und in die Gasphase überführt wird, wobei das mit Quecksilber angereicherte Gas des Austreibungsreaktors anschließend in einer Vor-Entstaubungseinrichtung entstaubt wird, und nur ein Teilstrom des so angereicherten und entstaubten Gases bei hohen Temperaturen abgezogen und in einer nachfolgenden Sorptionsstufe gereinigt wird, während der verbleibende Teilstrom in einem Wärmeübertragungssystem auf die für die Austreibung des Quecksilbers im Austreibungsreaktor erforderliche Temperatur gebracht wird und als Trägergas dem Austreibungsreaktor erneut zugeführt wird.

Dabei wird das Trägergas im Kreis geführt, sodass das ausgetriebene Quecksilber in der Gasphase aufkonzentriert wird und lediglich ein Teilstrom mit hohen Quecksilberkonzentrationen ausgeschleust und in einer nachfolgenden Sorptionsstufe gereinigt wird. Die Rückführung des Trägergases ist mit geringem thermischen Aufwand verbunden, da das Abgas nicht abgekühlt wird. Lediglich der ausgeschleuste Teilstrom mit hoher Quecksilberkonzentration wird abgekühlt.

Die erfindungsgemäße Anlage zur Durchführung des obigen Verfahrens besteht im Wesentlichen aus
a. einem mit dem Sorbens beaufschlagbaren und mit einem Trägergas betreibbaren Austreibungsreaktor,
b. einer Vor-Entstaubungseinrichtung zur Entstaubung des mit Quecksilber angereicherten Gases des Austreibungsreaktors,
c. einer Trenneinrichtung, die mit der Vor-Entstaubungseinrichtung verbundenen ist und zwei Ausgänge vorsieht,
d. sowie einer nachfolgenden Sorptionsstufe,
wobei der eine Ausgang der Trenneinrichtung mit der Sorptionsstufe zur Zuführung des Teilstroms und der andere Ausgang über ein der Materialzufuhr vorgeschaltetes Wärmeübertragungssystem mit dem Austreibungsreaktor zur Rückführung und Erwärmung des verbleibenden Teilstroms als Trägergas in Verbindung steht.

Weitere Ausgestaltungen der Erfindung sind Gegenstand der Unteransprüche. Gemäß einer bevorzugten Ausgestaltung der Erfindung handelt es sich bei dem Sorbens um Staub aus dem Zementherstellungsprozess, insbesondere Zementrohmehl und/oder Ofenstaub. Weiterhin kann vorgesehen werden, dass ein zusätzliches Sorbens dem Abgas des Zementherstellungsprozesses injiziert wird und das Sorbens mit dem angelagerten Quecksilber in einem Filter abgetrennt und dem Austreibungsreaktor zugeführt wird.

Gemäß einer anderen Variante des Verfahrens dient der im Abgas des Zementherstellungsprozesses enthaltende Staub als erstes Sorbens für das Quecksilber, wobei außerdem ein zweites Sorbens zugegeben wird und das erste und das zweite Sorbens mit dem angelagerten Quecksilber gemeinsam in einem Filter abgetrennt und dem Austreibungsreaktor zugeführt werden.

Es ist aber auch denkbar, dass dem Abgas nach dem Filter ein zweites Sorbens injiziert wird, wobei das zweite Sorbens mit dem angelagerten Quecksilber in einem zweiten Filter abgetrennt wird, und das abgetrennte erste und das abgetrennte zweite Sorbens separat voneinander im Austreibungsreaktor behandelt werden.

Das Abgas des Austreibungsreaktors wird vorzugsweise kontinuierlich bei hohen Temperaturen abgezogen und zwischen dem Austreibungsreaktor und der nachfolgenden Sorptionsstufe einem Abscheider zugeführt, wobei das abgeschiedene Sorbens dem Zementherstellungsprozess zugeführt oder als Sorbens dem Abgas des Zementherstellungsprozesses erneut injiziert wird. Hierdurch wird eine kontinuierliche Quecksilberabscheidung, eine sichere Einhaltung gesetzlicher Grenzwerte und eine Rezirkulation der Stäube bei möglichst geringem Aufwand ermöglicht.

Nachdem lediglich ein geringer Gasstrom mit hoher Quecksilberkonzentration ausgeschleust und abgekühlt wird, während der verbleibende Teilstrom als Trägergas dem Austreibungsreaktor erneut zugeführt wird, ist nur die Wärme des abgezogenen Teilstroms und der Wärmeverlust des Austreibungsreaktors als thermische Energie den Prozess zuzuführen. Der Wärmebedarf des Austreibungsreaktors kann beispielsweise durch Quenche mit Abgasen des Zementherstellungsprozesses gedeckt werden oder durch ein Wärmeübertragungssystem bereit gestellt werden, wobei die Abwärme von Abgasen des Zementherstellungsprozesses indirekt auf das Trägergas des Austreibungsreaktors übertragen wird.

Der Austreibungsreaktor wird vorzugsweise als Wirbelschichtreaktor betrieben.

Gemäß einer weiteren Ausgestaltung der Erfindung wird das im Kreis geführte Trägergas nach jedem Durchlauf entstaubt. Auch der abgezogene Teilstrom wird entstaubt und gekühlt. Das Quecksilber des abgezogenen Teilstroms wird beispielsweise durch Adsorption an einem Aktivkohle-Festbett oder im Flugstrom durch Adsorption injizierter Aktivkohle entfernt.

Die durch den abgezogenen Teilstrom reduzierte Trägergasmenge für den Austreibungsreaktor wird beispielsweise durch Prozessabluft des Zementherstellungsprozesses und/oder Frischluft und/oder Rezirkulation des gereinigten Teilstromes kompensiert.

Weitere Vorteile und Ausgestaltung der Erfindung werden im Folgenden anhand der nachfolgenden Beschreibung und der Zeichnung näher erläutert.

In der Zeichnung zeigen
- Fig. 1: ein Blockschaltbild einer Anlage zur Zementherstellung und zur Abscheidung von Quecksilber,
- Fig. 2: eine alternative Ausführungsform der Abscheidung des mit Quecksilber angelagerten Sorbens gemäß Detail X in Fig. 1,
- Fig. 3: eine alternative Ausführungsform der nachfolgenden Sorptionsstufe gemäß Detail Y der Fig. 1 und
- Fig. 4: eine weitere alternative Ausführungsform der nachfolgenden Sorptionsstufe gemäß Detail Y der Fig. 1.

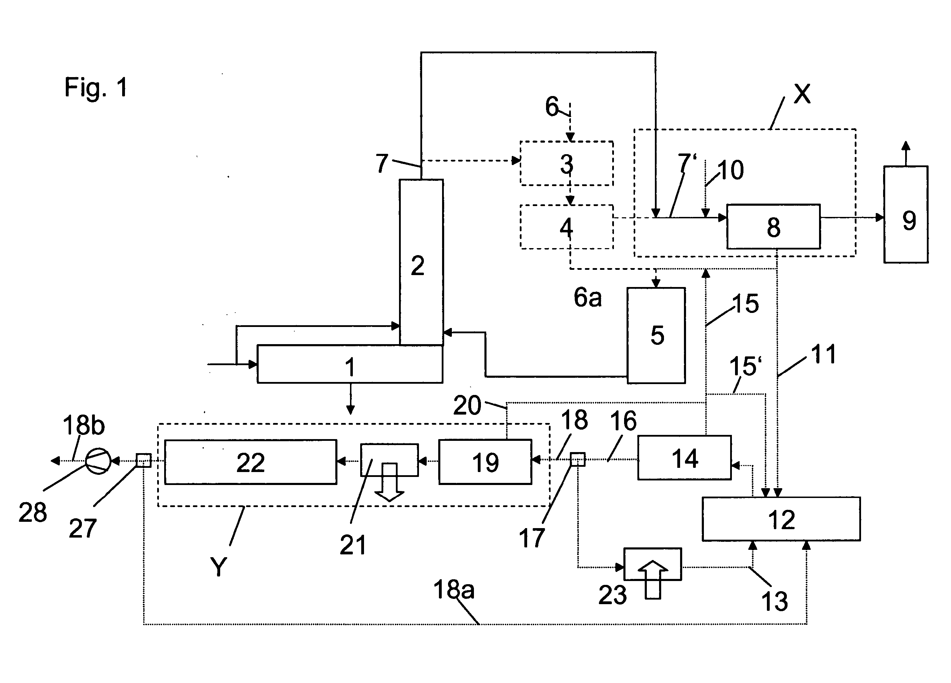

Fig. 1 zeigt eine Anlage mit allen wesentlichen Einrichtungen zur Zementklinkerherstellung sowie zur Abscheidung von Quecksilber aus den Abgasen des Zementherstellungsprozesses.

Die Anlage zur Zementklinkerherstellung besteht im Wesentlichen aus einem mit dem Bezugszeichen 1 versehenden Ofen mit Kühler, einem Vorwärmer 2, einer Rohmühle 3, einem Zyklon 4 sowie einem Silo 5.

Beim sogenannten Verbundbetrieb wird staubbeladenes Vorwärmerabgas 7 zumindest teilweise zur Rohmühle 3 geführt, wo Rohmaterial 6 gemahlen und durch die thermische Energie der Vorwärmerabgase getrocknet wird. Nach dem Abscheiden des Rohmehls 6a im Zyklon 4 wird dieses in einem Silo 5 zwischengelagert, bevor es im Vorwärmer, Ofen und Kühler in der bekannten Art und Weise wärmebehandelt wird.

Das Abgas des Zyklons 4 und die ggf. nicht zur Rohmühle 3 geleiteten Vorwärmerabgase 7 werden als Abgas 7' des Zementherstellungsprozesses zur Entstaubung einem Filter 8 zugeführt. Hierbei kann es sich beispielsweise um einen Gewebe- oder Elektrofilter handeln. Das entstaubte Gas gelangt über einen Kamin 9 in die Atmosphäre. Im Verbundbetrieb wird somit im Filter 8 sowohl der Staub aus dem Ofen/Vorwärmer als auch der Staub aus der Rohmühle 3 abgeschieden.

Beim Direktbetrieb kommen die Rohmühle 3 und der Zyklon 4 nicht zum Einsatz, sodass im Filter 8 nur der Staub abgeschieden wird, der von Ofen bzw. Vorwärmer emittiert wird.

Durch Kondensation und Adsorption reichert sich das Quecksilber an dem im Abgas enthaltenen Staub an. Das Quecksilber wird zusammen mit dem Staub im Filter 8 abgeschieden. Im Verbundbetrieb erfolgt eine sehr gute Sorption des Quecksilbers im Bereich der Mahltrocknung, die auf den innigen Gas-Feststoffkontakt, die niedrigen Temperaturen von etwa 90°C und die Generierung von sehr großen Oberflächen durch die sehr feine Vermahlung des Rohmaterials auf Korndurchmesser von kleiner 100 µm zurückzuführen ist.

Wird die Zementanlage jedoch im Direktbetrieb betrieben, gelangt das mit Quecksilber angereicherte Vorwärmerabgas 7 nach einer nicht dargestellten Abkühlung mit Luft oder Wasser direkt in den Filter 8. Da die Sorption am Staub in diesem Fall deutlich schlechter ausfällt, ist die Injektion eines zusätzlichen Sorbens 10, insbesondere Kohlenstoff, in diesem Fall besonders sinnvoll. Das zusätzliche Sorbens kann aber auch im Verbundbetrieb zugegeben werden, um die Sorption weiter zu verbessern.

Das im Filter 8 abgeschiedene Sorbens 11 setzt sich zumindest aus dem ersten, durch Staub gebildeten und ggf. dem zweiten Sorbens 10 zusammen, wobei das im Abgas enthaltende Quecksilber an den Sorbentien sorbiert wurde. Das Sorbens 11 wird dann einem Austreibungsreaktor 12 zugeführt, der mit einem heißen Trägergas 13 betrieben wird und vorzugsweise als Wirbelschichtreaktor ausgebildet ist. Der Austreibungsreaktor 12 wird vorzugsweise mit Staubbeladungen des Trägergases 13 von mindestens 350g/Nm³ betrieben.

Das Sorbens wird im Austreibungsreaktor 12 auf Temperaturen von mehr als 250°C erhitzt, sodass das Quecksilber aus dem Sorbens ausgetrieben und in die Gasphase überführt wird. Das mit Quecksilber angereicherte Gas des Austreibungsreaktors 12 wird anschließend in einer Vor-Entstaubungseinrichtung 14 entstaubt. Der dabei anfallende Staub 15 wird wieder dem Zementherstellungsprozess, insbesondere dem Silo 5 zugeführt. Es ist allerdings auch vorstellbar, dass ein Teilmassenstrom des Staubes 15 als Teilmassenstrom 15' dem Austreibungsreaktor entweder getrennt vom Sorbens 11 oder zusammen mit dem Sorbens 11 zugeführt wird. Durch Rezirkulation eines Teilmassenstromes kann die notwendige Verweilzeit für das Ausgasen von Schwermetallen wie z.B. Quecksilber erhöht und damit die Schadstoffkonzentration im Produkt minimiert werden.

Der mit Quecksilber angereicherte Gasstrom 16 verlässt die Vor-Entstaubungseinrichtung 14 und wird dem Eingang einer Trenneinrichtung 17 zugeführt, welche zwei Ausgänge vorsieht, wobei der eine Ausgang der Trenneinrichtung 17 mit einer Sorptionsstufe Y zur Zuführung eines Teilstroms 18 und der andere Ausgang mit dem Wärmeübemagungssystem 23, das Materialaufgabe und Austreibungsreaktor 12 vorgeschaltet ist, zur Rückführung des verbleibenden Teilstroms als Trägergas 13 in Verbindung steht.

Um eine hohe Quecksilberabscheidung zu ermöglichen, ist eine ausreichende Temperatur in der Wirbelschicht des Austreibungsreaktors 12 erforderlich. Die Verdampfung von Quecksilber im elementaren Zustand erfolgt bei 357°C. Die Temperierung erfolgt daher vorzugsweise auf eine Temperatur zwischen 360 und 400°C.

Liegt das Quecksilber als HgCl₂ vor, kann es bereits bei geringeren Gastemperaturen ausdampfen. Abhängig von der erforderlichen Abscheideleistung, der Quecksilber-Verdampfungsrate und der Quecksilber-Eintrittsmenge in den Zementherstellungsprozess, kann daher auch eine geringere Temperatur ausreichend sein. Abhängig von der Quecksilberverbindung können aber auch höhere Temperaturen erforderlich sein, um eine vollständige Überführung in den gasförmigen Zustand zu ermöglichen. Die optimale Betriebstemperatur ist daher vom Anwendungsfall abhängig und ist empirisch zu bestimmen, indem die Quecksilberkonzentration im Staub 15 der Vor-Entstaubungseinrichtung 14 kontrolliert wird.

Um die für die Austreibung des Quecksilbers im Austreibungsreaktor 12 erforderliche Temperatur zu erreichen, wird ein geeignetes Wärmeübertragungssystem 23 bereitgestellt, welches beispielsweise die Abwärme von Abgasen des Zementherstellungsprozesses indirekt auf das Trägergas 13 des Austreibungsreaktors 12 überträgt. Es ist aber natürlich auch denkbar, dass im Wärmeübertragungssystem 23 ein heißer Abgasstrom aus dem Zementherstellungsprozeß oder ein in einem Heißgaserzeuger erzeugter Heißgasstrom mit dem teilweise umlaufenden Gasstrom 16 gemischt wird und dabei die für das Erwärmen des Feststoffes und Austreiben des Quecksilbers benötigte Wärmemenge bereit gestellt wird. Die Aufheizung des zum Austreibungsreaktor rückgeführten Teilstroms 13 kann im Wärmeübertragungssystem 23 bei geringen Staubgehalten mit besserem Wirkungsgrad als bei hohen Staubgehalten erfolgen, da die Staubbeladung des teilweise umlaufenden Gasstromes 16 in der Vor-Entstaubungseinrichtung 14 gemindert wurde. Insbesondere bei Ausführung des Wärmeübertragungssystems 23 als indirekter Wärmetauscher ist eine effiziente Minderung der Staubkonzentration in der Gasphase notwendig. Dadurch wird die Pelzbildung auf den Rohren wesentlich gemindert und der Wirkungsgrad des Wärmetauschers im Vergleich zu hohen Staubbeladungen verbessert.

Der in der Trenneinrichtung 17 abgezweigte und der Sorptionsstufe Y zugeführte heiße Teilstrom 18 beträgt weniger als 50%, vorzugsweise weniger als 25%, höchstvorzugsweise weniger als 5%. Dabei ist es zweckmäßig, wenn die Untergrenze bei wenigstens 1 % liegt. Dieser Teilstrom 18 wird zunächst in einem Hochtemperaturfilter 19 nahezu vollständig entstaubt. Die abgetrennten Feststoffe 20 können wiederum dem Zementherstellungsprozess zugeführt werden.

Nachfolgend ist eine Senkung der Temperatur und somit einer Reduzierung des thermischen Energiegehaltes erforderlich, um dann eine ausreichende Adsorption des Quecksilbers zu ermöglichen. Die Energieabfuhr ist beispielsweise mittels Wärmetauscher 21 oder Quenche möglich.

Nachfolgend ist ein Aktivkohle-Festbett 22 vorgesehen, an dem die Sorption erfolgt. Der auf diese Weise gereinigte Teilstrom kann über eine Trenneinrichtung 27 beispielsweise als Teilstrom 18a erneut in den Austreibungsreaktor 12 eingebracht werden oder es kann ein beliebiger Teilstrom 18b über einen Kamin in die Atmosphäre geleitet werden. Sofern ein Teilstrom 18b abgeführt wird, also nicht in den Austreibungsreaktor 12 rezirkuliert wird, muss die dort fehlende Gasmenge durch anderweitige Prozessabluft der Zementanlage und/oder Frischluft und/oder eine andere Heißgasquelle ersetzt werden, sodass der Gasstrom 16 konstant bleibt. Es ist allerdings auch vorstellbar, den Abgasstrom 18b an einer geeigneten Stelle, z.B. im Kühlerbereich, Vorwärmerbereich oder Abgasstrang des Zementherstellungsprozesses einzukoppeln. Ebenso kann es bei Ausführung des Wärmeübertragungssystems 23 als indirekter Gas-Gas Wärmetauscher vorteilhaft sein, das aus dem Wärmetauscher austretende Abgas an geeigneter Stelle einzuleiten. Dies kann dann zweckmäßig sein , wenn die Anzahl überwachungspflichtiger Emissionsquellen begrenzt werden soll.

Die Anlage zur Reinigung des Sorbens von Quecksilber wird vorzugsweise im Unterdruck betrieben, um eine ungewollte Quecksilberemission aus der Anlage sicher ausschließen zu können. Beispielsweise stellt ein Ventilator 28 das Grundunterdruckniveau in der Anlage sicher. Der mit diesem Ventilator abgezogene Teilgasstrom 18b muss dann durch eine entsprechende Menge an Frischgas ersetzt werden. Bei diesem Frischgasstrom kann es sich um Prozessabluft der Zementanlage und/oder Frischluft und/oder einer anderen Heißgasquelle handeln.

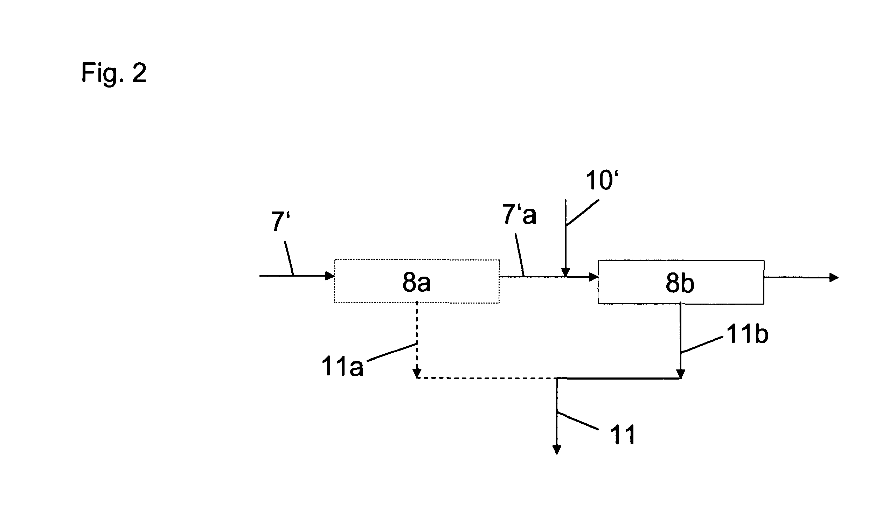

Fig. 2 zeigt eine Variante zur Austragung des Sorbens aus dem Zementherstellungsprozess (als Ersatz des Details X der Fig. l), die insbesondere im Direktbetrieb der Zementanlage, also bei abgeschalteter Rohmühle 3 zur Anwendung kommen kann. Hier sind zwei hintereinander geschaltete Filter 8a und 8b vorgesehen. Der im Abgas 7' des Zementherstellungsprozesses enthaltene Staub dient dabei als erstes Sorbens für das Quecksilber und wird im ersten Filter 8a abgeschieden. In das verbleibende Abgas 7'a wird ein zweites Sorbens 10', vorzugsweise ein kohlenstoffhaltiges Sorbens, injiziert, an dem sich eine weiterer Teil des noch im Abgas enthaltenen Quecksilbers anlagert.

Das im Filter 8a bzw. im Filter 8b abgeschiedene Sorbens 11a bzw. 11b kann entweder gemeinsam oder getrennt voneinander dem Austreibungsreaktor 12 zugeführt werden. Bei einer getrennten Zuführung besteht die Möglichkeit, das in der Entstaubungseinrichtung 14 abgeschiedene Sorbens erneut dem Abgas zu injizieren.

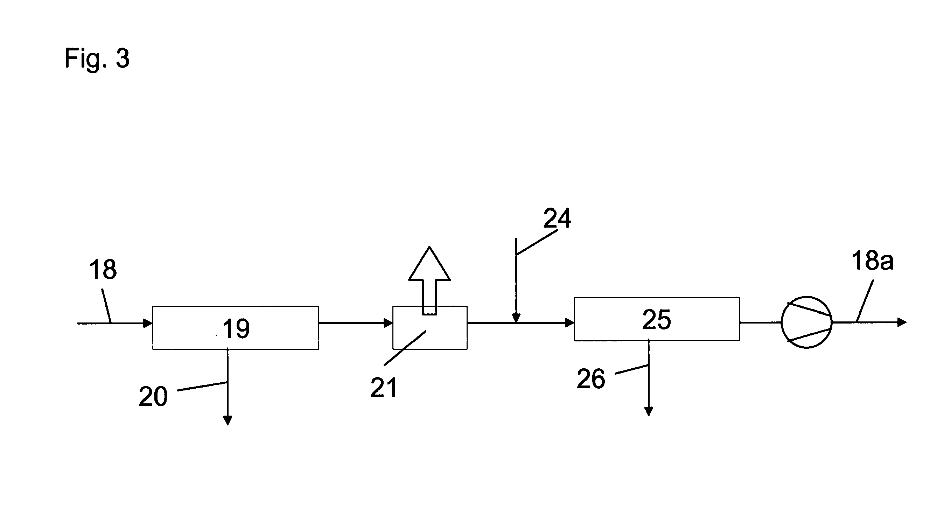

Fig. 3 zeigt eine alternative Ausführungsform der Sorptionsstufe Y. Auch hier wird der aufkonzentrierte und abgetrennte Teilstrom 18 zunächst in einem Hochtemperaturfilter 19 nahezu vollständig entstaubt, wobei die abgetrennten Feststoffe 20 wiederum zum Zementherstellungsprozess zurückgeführt werden können. Nachfolgend ist ebenfalls eine Senkung der Temperatur und somit eine Reduzierung des thermischen Energiegehaltes erforderlich. Die Energieabführ ist beispielsweise in einem Wärmetauscher 21 oder durch Quenche möglich. Anstelle des in Fig. 1 vorgesehenen Aktivkohlefilters 22 wird beim Ausführungsbeispiel gemäß Fig. 3 das Flugstromverfahren zur Quecksilberentfernung im aufkonzentrierten Gas eingesetzt. Hierzu wird beispielsweise Aktivkohle 24 injiziert. In einem nachfolgenden Filter 25 wird der mit Quecksilber beladene Kohlenstoff26 abgeschieden und als Abfallprodukt entsorgt. Der gereinigte Teilstrom 18a kann erneut im Austreibungsreaktor 12 eingesetzt oder über den Kamin in die Umgebung ableitet werden.

Wird bei der in Fig. 2 offenbarten Variante das im Filter 8b abgeschiedene Sorbens 11b unabhängig von dem Sorbens 11a im Austreibungsreaktor 12 behandelt, sind im Abgas im Wesentlichen keine Stäube enthalten, sodass auf das Hochtemperaturfilter 19 in Fig. 3 verzichtet werden kann.

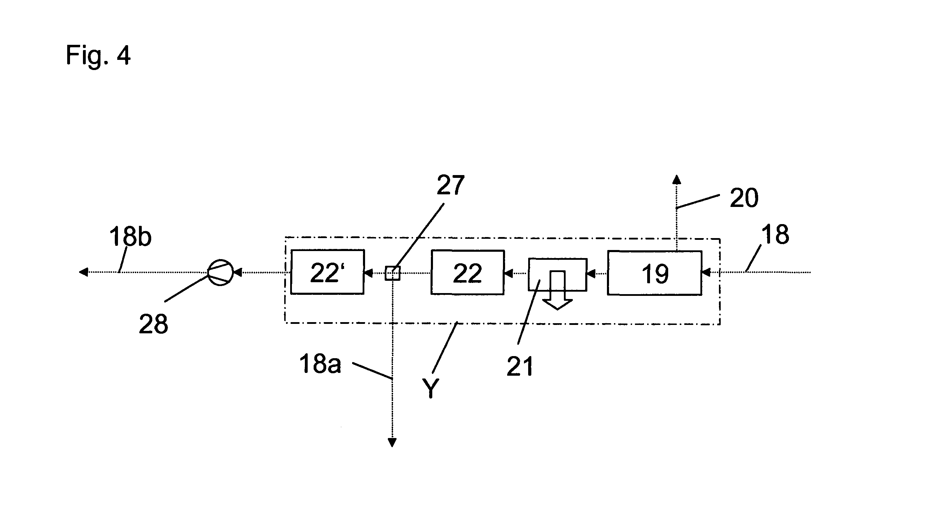

Fig. 4 zeigt eine weitere alternative Ausführungsform der Sorptionsstufe Y. Auch hier wird der aufkonzentrierte und abgetrennte Teilstrom 18 zunächst in einem Hochtemperaturfilter 19 nahezu vollständig entstaubt, wobei die abgetrennten Feststoffe 20 wiederum zum Zementherstellungsprozess zurückgeführt werden können. Nachfolgend ist ebenfalls eine Senkung der Temperatur und somit eine Reduzierung des thermischen Energiegehaltes erforderlich. Die Energieabfuhr ist beispielsweise in einem Wärmetauscher 21 oder durch Quenche möglich. Zusätzlich zum in Fig. 1 vorgesehenen Aktivkohlefilters 22 wird beim Ausführungsbeispiel gemäß Fig. 4 ein weiteres dem Aktivkohlefilter 22 baugleiches Aktivkohlefilter 22' nachgeschaltet, dass den Gasstrom 18b von vorhandenen Schadstoffen, z.B. Quecksilber, reinigt. Mittels des Stromteilers 27 wird der Teilgasstromes 18a bei dieser Variante zwischen den beiden Aktivkohlefilter abgezogen und dem Austreibungsreaktor zugeführt. Dies ist dann vorteilhaft, wenn das Festbettfilter 22 so sehr mit Schadstoffen beladen wird, dass Schadstoffe durchbrechen. Das zweite Aktivkohlefilter stellt dabei sicher, dass die Schadstoffemission aus der Anlage minimal bleibt. Bei Verwendung spezieller Aktivkohlen können sehr hohe Konzentrationen von beispielsweise mehr als 10 Gew-% Quecksilber auf Aktivkohle erreicht werden.

## Patentansprüche

1. Verfahren zur Abscheidung von Quecksilber aus Abgasen (7') eines Zementherstellungsprozesses, wobei das Quecksilber an einem Sorbens sorbiert wird und des sorbens einem mit einem Trägergas (13) betriebenen Austreibungsreaktor (12) zugeführt wird, wo das Sorbens anschließend auf Temperaturen von mehr als 250°C erhitzt wird, so dass das Quecksilber aus dem Sorbens ausgetrieben und in die Gasphase überführt wird, wobei das mit Quecksilber angereicherte Gas des Austreibungsreaktors (12) anschließend bei hohen Temperaturen in einer Vor-Entstaubungseinrichtung (14) entstaubt wird, wo nach ein Teilstrom (18) des so angereicherten und entstaubten Gases in einer nachfolgenden Sorptionsstufe (Y) gereinigt wird, während der verbleibende Teilstrom in einem Wärmeübertragungssystem (23) wieder auf die für die Austreibung des Quecksilbers im Austreibungsreaktor (12) erforderliche Temperatur gebracht und als Trägergas (13) dem Austreibungsreaktor (12) erneut zugeführt wird.

2. Verfahren nach Anspruch 1, **dadurch gekennzeichnet, dass** es sich bei dem Sorbens um Staub aus dem Zementherstellungsprozess, insbesondere Zementrohmehl und/oder Ofenstaub handelt.

3. Verfahren nach Anspruch 1, **dadurch gekennzeichnet, dass** das Sorbens mit dem angelagerten Quecksilber in einem Filter (8, 8a) abgetrennt und dem Austreibungsreaktor (12) zugeführt wird.

4. Verfahren nach Anspruch 1, **dadurch gekennzeichnet, dass** der im Abgas enthaltende Staub als erstes Sorbens für das Quecksilber dient und dass ein zweites Sorbens (10) zugegeben wird und das erste und das zweite Sorbens mit dem angelagerten Quecksilber gemeinsam in einem Filter (8) abgetrennt und dem Austreibungsreaktor zugeführt werden.

5. Verfahren nach Anspruch 3, **dadurch gekennzeichnet, dass** dem Abgas (7'a) nach dem Filter (8a) ein zweites Sorbens (10') injiziert wird, wobei das zweite Sorbens mit dem angelagerten Quecksilber in einem zweiten Filter (8b) abgetrennt wird, und das abgetrennte erste (11a) und das abgetrennte zweite (11b) Sorbens separat voneinander im Austreibungsreaktor (12) behandelt werden.

6. Verfahren nach Anspruch 1, **dadurch gekennzeichnet, dass** das Abgas zwischen dem Austreibungsreaktor (12) und der nachfolgenden Sorptionsstufe (Y) eine Entstaubungseinrichtung zugeführt wird, wobei das abgeschiedene Sorbens dem Zementherstellungsprozess zugeführt oder als Sorbens dem Abgas erneut injiziert wird.

7. Verfahren nach Anspruch 1, **dadurch gekennzeichnet, dass** der Wärmebedarf des Austreibungsreaktors (12) durch Quenche mit Abgasen des Zementherstellungsprozesses erfolgt.

8. Verfahren nach Anspruch 1, **dadurch gekennzeichnet, dass** das Wärmeübertragungssystem (23) die Abwärme von Abgasen des Zementherstellungsprozesses indirekt auf das Trägergas (13) überträgt.

9. Verfahren nach Anspruch 1, **dadurch gekennzeichnet, dass** der abgezogene Teilstrom (18) entstaubt und gekühlt wird.

10. Verfahren nach Anspruch 1, **dadurch gekennzeichnet, dass** das Quecksilber durch Adsorption an wenigstens einem Aktivkohle-Festbett (22, 22') aus dem abgezogenen Teilstrom entfernt wird.

11. Verfahren nach Anspruch 1, **dadurch gekennzeichnet, dass** das Quecksilber im Flugstrom durch Adsorption an injizierter Aktivkohle (24) aus dem abgezogenen Teilstrom (18) entfernt wird.

12. Verfahren nach Anspruch 1, **dadurch gekennzeichnet, dass** der in der Sorptionsstufe (Y) gereinigte Teilstrom (18) vollständig oder teilweise zum Austreibungsreaktor (12) zurückgeführt oder aus dem Kreislauf ausgeschleust wird, wobei die nicht rückgeführte Trägergasmenge für den Austreibungsreaktor (12) durch Prozessabluft des Zementherstellungsprozesses und/oder Frischluft kompensiert wird.

13. Anlage zur Durchführung des Verfahrens zur Abscheidung von Quecksilber gemäß einem der vorhergehenden Ansprüche, mit
a. einem mit dem Sorbens (10) beaufschlagbaren und mit einem Trägergas (13) betreibbaren Austreibungsreaktor (12),
b. einer Vor-Entstaubungseinrichtung (14) zur Entstaubung des mit Quecksilber angereicherten Gases des Austreibungsreaktors (12),
c. einer Trenneinrichtung (17) die mit der Vor-Entstaubungseinrichtung (14) verbundenen ist und zwei Ausgänge vorsieht,
d. sowie einer Sorptionsstufe (Y),
wobei der eine Ausgang der Trenneinrichtung (17) mit der Sorptionsstufe (Y) zur Zuführung des Teilstroms (18) und der andere Ausgang über ein Wärmeübertragungssystem (23) mit dem Austreibungsreaktor (12) zur Rückführung des verbleibenden Teilstroms als Trägergas (13) in Verbindung steht.

## Claims

1. Method for separating mercury from waste gases (7') of a cement production process, the mercury being sorbed on a sorbent and the sorbent being supplied to a discharge reactor (12) which is operated with a carrier gas (13), where the sorbent is subsequently heated to temperatures of more than 250°C so that the mercury is discharged from the sorbent and changed into the gas phase, the gas of the discharge reactor (12) that has accumulated mercury subsequently having the dust removed from it at high temperatures in a preliminary dust removal device (14), afterwards a part-flow (18) of the gas which has been enriched and had the dust removed is cleaned in a subsequent sorption stage (Y), whilst the remaining part-flow is brought again to the temperature required for the discharge of the mercury in the discharge reactor (12) in a heat transfer system (23) and is again supplied as a carrier gas (13) to the discharge reactor (12).

2. Method according to claim 1, **characterised in that** the sorbent is dust from the cement production process, in particular cement raw meal and/or oven dust.

3. Method according to claim 1, **characterised in that** the sorbent with the accumulated mercury is separated in a filter (8, 8a) and supplied to the discharge reactor (12).

4. Method according to claim 1, **characterised in that** the dust contained in the waste gas acts as a first sorbent for the mercury and **in that** a second sorbent (10) is added and the first and second sorbent with the accumulated mercury are separated together in a filter (8) and supplied to the discharge reactor.

5. Method according to claim 3, **characterised in that** a second sorbent (10') is injected into the waste gas (7'a) after the filter (8a), the second sorbent with the accumulated mercury being separated in a second filter (8b) and the separated first sorbent (11a) and separated second sorbent (11b) being processed separately from each other in the discharge reactor (12).

6. Method according to claim 1, **characterised in that** the waste gas between the discharge reactor (12) and the subsequent sorption step (Y) is supplied to a dust removal device, the separated sorbent being supplied to the cement production process or being injected again as a sorbent in the waste gas.

7. Method according to claim 1, **characterised in that** the heat requirement of the discharge reactor (12) is carried out by means of quenchers with waste gases of the cement production process.

8. Method according to claim 1, **characterised in that** the heat transfer system (23) transfers the waste heat of waste gases of the cement production process indirectly to the carrier gas (13).

9. Method according to claim 1, **characterised in that** the drawn off part-flow (18) has the dust removed from it and is cooled.

10. Method according to claim 1, **characterised in that** the mercury is removed from the drawn-off part-flow by adsorption on at least one activated carbon solid bed (22, 22').

11. Method according to claim 1, **characterised in that** the mercury in the entrained flow is removed from the drawn-off part-flow (18) by means of adsorption on injected activated carbon (24).

12. Method according to claim 1, **characterised in that** the part-flow (18) which is cleaned in the sorption stage (Y) is completely or partially returned to the discharge reactor (12) or discharged from the circuit, the carrier gas quantity which is not returned for the discharge reactor (12) being compensated for by waste process air of the cement production process and/or fresh air.

13. System for carrying out the method for separating mercury according to one of the preceding claims, having:
a. a discharge reactor (12) which can be acted on with the sorbent (10) and which can be operated with a carrier gas (13),
b. a preliminary dust removal device (14) for removing dust from the gas of the discharge reactor (12) which has accumulated mercury,
c. a separation device (17) which is connected to the preliminary dust removal device (14) and which provides two outputs,
d. and a sorption stage (Y),
one output of the separation device (17) being connected to the sorption stage (Y) in order to supply the part-flow (18) and the other output being connected by means of a heat transfer system (23) to the discharge reactor (12) in order to return the remaining part-flow as a carrier gas (13).

## Revendications

1. Procédé pour séparer du mercure de l'effluent gazeux (7') d'un processus de fabrication de ciment, sachant que le mercure est adsorbé sur un sorbant, et que le sorbant est conduit à un réacteur d'extraction (12) à gaz porteur (13), dans lequel le sorbant est ensuite chauffé à des températures supérieures à 250 °C, de sorte que le mercure est extrait du sorbant et transféré dans la phase gazeuse, sachant que le gaz enrichi en mercure du réacteur d'extraction (12) est ensuite dépoussiéré à hautes températures dans un dispositif de pré-dépoussiérage (14), après quoi un flux partiel (18) du gaz ainsi enrichi et dépoussiéré est purifié dans un étage de sorption (Y) qui suit, tandis que le flux partiel restant est ramené, dans un système de transfert de chaleur (23), à la température nécessaire pour l'extraction du mercure dans le réacteur d'extraction (12), et reconduit de nouveau au réacteur d'extraction (12), en tant que gaz porteur (13).

2. Procédé selon la revendication 1, **caractérisé en ce que** le sorbant est de la poussière provenant du processus de fabrication de ciment, notamment de la farine de ciment et / ou de la poussière de four.

3. Procédé selon la revendication 1, **caractérisé en ce que** le sorbant avec la charge de mercure est séparé dans un filtre (8, 8a) et conduit au réacteur d'extraction (12).

4. Procédé selon la revendication 1, **caractérisé en ce que** la poussière contenue dans l'effluent gazeux sert de premier sorbant pour le mercure, et qu'un deuxième sorbant (10) est ajouté, et que le premier et le deuxième sorbants avec la charge de mercure sont, en commun, séparés dans un filtre (8), et conduits au réacteur d'extraction.

5. Procédé selon la revendication 3, **caractérisé en ce qu'**un deuxième sorbant (10') est injecté dans l'effluent gazeux (7'a) après le filtre (8a), le deuxième sorbant avec la charge de mercure étant séparé dans un deuxième filtre (8b), et le premier sorbant séparé (11a) et le deuxième sorbant séparé (11b) étant traités séparément l'un de l'autre dans le réacteur d'extraction (12).

6. Procédé selon la revendication 1, **caractérisé en ce que**, entre le réacteur d'extraction (12) et l'étage de sorption (Y) qui suit, l'effluent gazeux est conduit à un système de dépoussiérage, le sorbant recueilli étant conduit au processus de fabrication de ciment ou réinjecté, en tant que sorbant, dans l'effluent gazeux.

7. Procédé selon la revendication 1, **caractérisé en ce que** la chaleur nécessaire au réacteur d'extraction (12) est tirée, par refroidissement rapide, de l'effluent gazeux du processus de fabrication de ciment.

8. Procédé selon la revendication 1, **caractérisé en ce que** le système de transfert de chaleur (23) transfère indirectement au gaz de support (13) la chaleur résiduelle de l'effluent gazeux du processus de fabrication de ciment.

9. Procédé selon la revendication 1, **caractérisé en ce que** le flux partiel prélevé (18) est dépoussiéré et refroidi.

10. Procédé selon la revendication 1, **caractérisé en ce que** le mercure est éliminé du flux partiel prélevé, par adsorption sur au moins un lit fixe de charbon actif (22, 22').

11. Procédé selon la revendication 1, **caractérisé en ce que** le mercure présent dans le lit entraîné est éliminé du flux partiel prélevé (18), par adsorption sur charbon actif (24) injecté.

12. Procédé selon la revendication 1, **caractérisé en ce que** le flux partiel (18), purifié dans l'étage de sorption (Y), est reconduit totalement ou partiellement au réacteur d'extraction (12) ou retiré du circuit, sachant que la quantité de gaz porteur non recyclée est compensée pour le réacteur d'extraction (12) par de l'effluent du processus de fabrication de ciment et / ou de l'air frais.

13. Installation pour l'exécution du procédé de séparation de mercure selon l'une des revendications précédentes, comprenant
a. un réacteur d'extraction (12) à gaz porteur (13) auquel peut être amené le sorbant (10),
b. un dispositif de pré-dépoussiérage (14) pour dépoussiérer le gaz enrichi en mercure du réacteur d'extraction (12),
c. un séparateur (17) relié au dispositif de pré-dépoussiérage (14) et présentant deux sorties,
d. ainsi qu'un étage de sorption (Y),
dans lequel une sortie du séparateur (17) est en liaison avec l'étage de sorption (Y) pour l'admission du flux partiel (18), et l'autre sortie est en liaison, par l'intermédiaire d'un système de transfert de chaleur (23), avec le réacteur d'extraction (12) pour l'admission du flux partiel restant comme gaz porteur (13).
